# EUROPEAN PATENT SPECIFICATION

(11) **EP 2 552 095 B1**
(45) Date of publication and mention of the grant of the patent: **03.04.2019**
(21) Application number: 12005366.5
(22) Date of filing: 23.07.2012
(51) Int. Cl.: H04N 1/409, G06T 5/00

(54) **Image processing apparatus**
Bildverarbeitungsvorrichtung
Appareil de traitement d'images

(30) Priority: 29.07.2011 JP 2011167437
(43) Date of publication of application: 30.01.2013
(73) Proprietor: CANON KABUSHIKI KAISHA, Tokyo (JP)
(72) Inventor: Nishikawa, Yukinori, Tokyo (JP)
(74) Representative: WESER & Kollegen

(56) References cited:
- US-A1- 2004 017 515
- US-A1- 2005 052 463
- US-A1- 2011 115 804

## Description

### BACKGROUND OF THE INVENTION

### Field of the Invention

The present invention relates to an image processing apparatus which processes image data.

### Description of the Related Art

There has conventionally been known an inkjet printing apparatus which prints on a printing medium by discharging ink from a printhead. In general, the inkjet printing apparatus includes a carriage on which a printhead and ink tank are mounted, a conveyance mechanism which conveys a printing medium, and a control mechanism which controls the operations of these units. The inkjet printing apparatus discharges ink while scanning the printhead in a direction (main scanning direction) perpendicular to the printing medium conveyance direction (sub-scanning direction). The inkjet printing apparatus intermittently conveys the printing medium between respective scans. By a plurality of scans and intermittent conveyance, the inkjet printing apparatus can print in the entire image region on the printing medium. The printhead includes a plurality of nozzle arrays corresponding to a plurality of types of ink colors. The printhead can print a color image by superposing ink droplets discharged from the respective nozzle arrays or applying them close to each other. A demand for inkjet printing apparatuses is growing in a wide range of industrial fields as a relatively simple, excellent printing method. Higher printing speeds and higher image qualities are requested. To meet these requests, the printheads of recent inkjet printing apparatuses are achieving higher resolutions and a larger number of nozzles.

In this situation, the data processing amount required per unit time is increasing more and more, and the speed of the image data processing system of the inkjet printing apparatus needs to be increased. Japanese Patent Laid-Open No. 2002-248813 discloses an arrangement in which an image processing-dedicated SRAM is arranged to accept only access from each image processing unit in order to increase the speed of the image data processing system. Japanese Patent Laid-Open No. 2002-248813 describes that this arrangement can increase the speed much more than an arrangement in which each image processing unit accesses a DRAM that stores image data received from a host apparatus.

The image processing unit executes, for example, smoothing processing. Smoothing processing refers, for a pixel (pixel of interest) to be printed, to data of a surrounding region (for example, 11 × 9 pixels) centered on the pixel of interest, and changes the pixel of interest in accordance with the result. At this time, image data is changed to smoothly print the contour of a figure formed from dots.

Smoothing processing needs to refer to pixel data of the surrounding region of the pixel of interest and check the feature. A region larger than an actual processing target region needs to be read out in advance from the DRAM into the image processing-dedicated SRAM. Data of a region referred to for the pixel of interest needs to be data before change by smoothing processing.

A case in which image data are processed sequentially for predetermined unit regions will be considered. In the nth processing, a region overlaps a region in the (n-1)th processing by the surrounding region for reference. Since pixel information of data used in the (n-1)th processing has already been changed, the data cannot be used again for reference of the surrounding region in the nth processing. For at least data of the overlapping region, unchanged image data needs to be read out again from the DRAM.

However, image data processed in the image processing-dedicated SRAM is generally written back in the DRAM. To use unchanged image data as described above, image data received from the host apparatus needs to be kept stored in the DRAM in addition to written-back image data, or image data needs to be received from the host apparatus every time unchanged image data becomes necessary.
US 2005/052463 A1 discloses a method for managing image processing data buffers for processes having overlap input data between iterations, including loading a data buffer with an initial input data array and performing an image data array operation on the input data array.

### SUMMARY OF THE INVENTION

An aspect of the present invention is to eliminate the above-mentioned problems with the conventional technology. The present invention provides an image processing apparatus which increases the image data processing efficiency.

The present invention in its aspect provides an image processing apparatus as specified in claims 1 to 3.

The present invention can increase the image data processing efficiency. Further features of the present invention will become apparent from the following description of exemplary embodiments with reference to the attached drawings.

### BRIEF DESCRIPTION OF THE DRAWINGS

Fig. 1 is a perspective view showing the schematic arrangement of an inkjet printing apparatus;
Fig. 2 is a block diagram showing the control arrangement of the inkjet printing apparatus;
Fig. 3 is a perspective view showing the schematic arrangement of the printing unit of the inkjet printing apparatus;
Fig. 4 is a block diagram showing an arrangement around the image processing units of the inkjet printing apparatus;
Fig. 5 is a block diagram showing the internal arrangement of an image processing-dedicated memory controller;
Fig. 6 is a view showing connection around the image processing-dedicated memory controller;
Figs. 7A to 7D are timing charts in data access between blocks;
Fig. 8A and 8B are views for explaining an image processing sequence in an embodiment;
Figs. 9A to 9D are views for explaining the image processing sequence in the embodiment;
Fig. 10 is a view exemplifying another arrangement of an SRAM;
Fig. 11 is the first view for explaining smoothing processing;
Fig. 12 is the second view for explaining smoothing processing;
Fig. 13 is the third view for explaining smoothing processing;
Figs. 14A to 14C are the fourth views for explaining smoothing processing; and
Figs. 15A and 15B are the fifth views for explaining smoothing processing.

### DESCRIPTION OF THE EMBODIMENTS

Preferred embodiments of the present invention will now be described hereinafter in detail, with reference to the accompanying drawings. It is to be understood that the following embodiments are not intended to limit the claims of the present invention, and that not all of the combinations of the aspects that are described according to the following embodiments are necessarily required with respect to the means to solve the problems according to the present invention. Note that the same reference numerals denote the same parts, and a repetitive description thereof will be omitted.

### <Description of Inkjet Printing Apparatus>

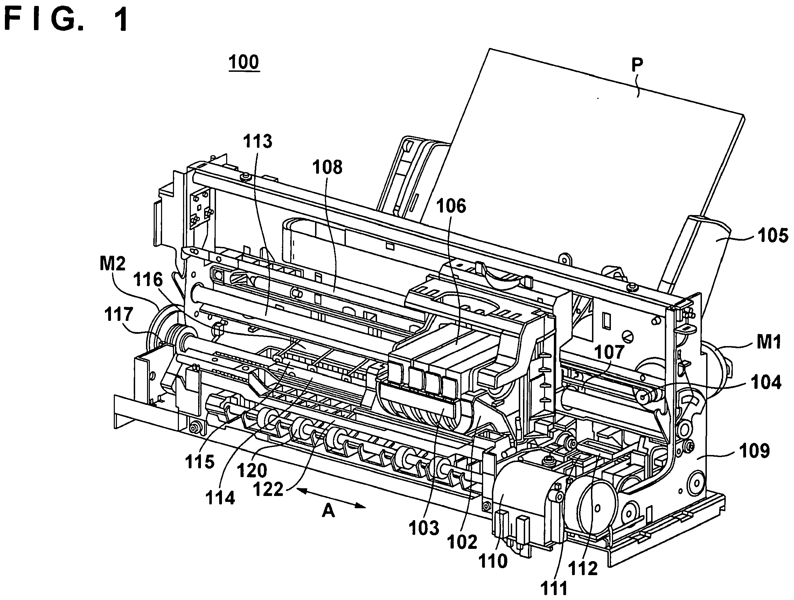

Fig. 1 is a perspective view showing the schematic arrangement of an inkjet printing apparatus as a typical embodiment of the present invention.

As shown in Fig. 1, an inkjet printing apparatus 100 prints as follows. A transmission mechanism 104 transmits a driving force generated by a carriage motor M1 to a carriage 102 which supports a printhead 103 for printing by discharging ink according to an inkjet method, thereby reciprocating the carriage 102 in directions indicated by arrow A. At the same time, a printing medium P such as printing paper is fed via a paper feed mechanism 105, and conveyed to a printing position. At the printing position, the printhead 103 discharges ink onto the printing medium P.

To maintain a good state of the printhead 103, the carriage 102 is moved to the position of a recovery device 110 to intermittently execute discharge recovery processing for the printhead 103.

In addition to the printhead 103, an ink cartridge 106 which stores ink to be supplied to the printhead 103 is mounted on the carriage 102 of the inkjet printing apparatus 100. The ink cartridge 106 is detachable from the carriage 102.

The inkjet printing apparatus 100 shown in Fig. 1 can print in color. For this purpose, four ink cartridges which store magenta (M), cyan (C), yellow (Y), and black (K) inks, respectively, are mounted on the carriage 102. These four ink cartridges are independently detachable.

The carriage 102 and printhead 103 can achieve and maintain necessary electrical connection by properly bringing their joint surfaces into contact with each other. By applying energy in accordance with a print signal, the printhead 103 selectively discharges ink from a plurality of orifices, thereby printing. Especially, the printhead 103 in the embodiment employs an inkjet method of discharging ink using thermal energy. The printhead 103 includes electrothermal transducers for generating thermal energy. Electrical energy applied to the electrothermal transducers is converted into thermal energy. Ink is discharged from orifices using a pressure change by growth and contraction of bubbles generated by film boiling caused by applying the thermal energy to ink. The electrothermal transducers are arranged in correspondence with respective orifices. By applying a pulse voltage to a corresponding electrothermal transducer in accordance with a print signal, ink is discharged from a corresponding orifice.

As shown in Fig. 1, the carriage 102 is coupled to part of a driving belt 107 of the transmission mechanism 104 which transmits the driving force of the carriage motor M1. The carriage 102 is guided and supported slidably along a guide shaft 113 in the directions indicated by arrow A. The carriage 102 reciprocates along the guide shaft 113 by forward rotation and reverse rotation of the carriage motor M1. A scale 108 (CR encoder film) is arranged in the moving direction (directions indicated by arrow A) of the carriage 102 to indicate the position of the carriage 102. In the embodiment, the scale 108 is formed by printing black bars at necessary pitches on a transparent PET film. One end of the scale 108 is fixed to a chassis 109, and the other end is supported by a leaf spring (not shown).

In the inkjet printing apparatus 100, a platen (not shown) is arranged to face the orifice surface of the printhead 103 on which orifices (not shown) are formed. Simultaneously when the carriage 102 supporting the printhead 103 is reciprocated by the driving force of the carriage motor M1, a print signal is supplied to the printhead 103 to discharge ink, thereby printing at the full width on the printing medium P conveyed onto the platen.

A conveyance motor M2 drives a conveyance roller 114 in Fig. 1 to convey the printing medium P. A pinch roller 115 makes the printing medium P abut against the conveyance roller 114 by a spring (not shown). A pinch roller holder 116 rotatably supports the pinch roller 115. A conveyance roller gear 117 is fixed to one end of the conveyance roller 114. The conveyance roller 114 is driven by rotation of the conveyance motor M2 that is transmitted to the conveyance roller gear 117 via an intermediate gear (not shown).

A discharge roller 120 discharges, from the inkjet printing apparatus, the printing medium P bearing an image formed by the printhead 103. The discharge roller 120 is driven by transmitting rotation of the conveyance motor M2. The discharge roller 120 abuts against a spur roller (not shown) which press-contacts the printing medium P by a spring (not shown). A spur holder 122 rotatably supports the spur roller.

In the inkjet printing apparatus 100, as shown in Fig. 1, the recovery device 110 for recovering the printhead 103 from a discharge failure is arranged at a desired position (for example, position corresponding to the home position) outside the range (outside the printing region) of reciprocating motion for the printing operation of the carriage 102 on which the printhead 103 is mounted.

The recovery device 110 includes a capping mechanism 111 which caps the orifice surface of the printhead 103, and a wiping mechanism 112 which cleans the orifice surface of the printhead 103. The recovery device 110 performs discharge recovery processing. More specifically, ink is forcibly discharged from orifices by a suction unit (for example, suction pump) within the recovery device in synchronism with capping of the orifice surface by the capping mechanism 111. Accordingly, viscosity-increased ink in the ink channel of the printhead 103, bubbles, and the like are removed.

In a non-printing operation or the like, the capping mechanism 111 caps the orifice surface of the printhead 103 so that the printhead 103 can be protected, and evaporation and drying of ink can be prevented. The wiping mechanism 112 is arranged near the capping mechanism 111, and wipes ink droplets attached to the orifice surface of the printhead 103.

The capping mechanism 111 and wiping mechanism 112 can normally maintain the ink discharge state of the printhead 103.

### <Control Arrangement of Inkjet Printing Apparatus>

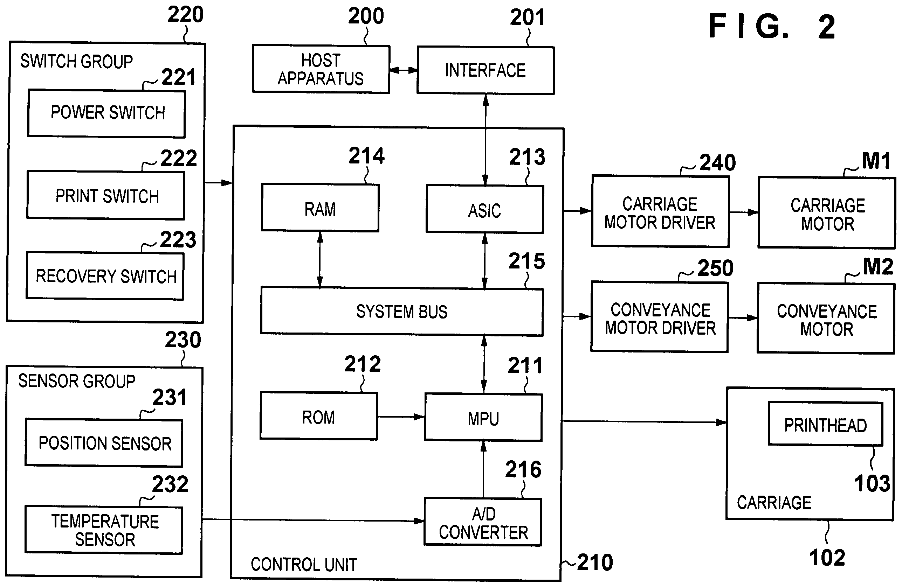

Fig. 2 is a block diagram showing the control arrangement of the inkjet printing apparatus 100 shown in Fig. 1.

As shown in Fig. 2, a control unit 210 includes an MPU 211, ROM 212, application specific integrated circuit (ASIC) 213, RAM 214, system bus 215, and A/D converter 216. The ROM 212 stores programs corresponding to control sequences (to be described later), necessary tables, and other permanent data. The ASIC 213 generates control signals to control the carriage motor M1, conveyance motor M2, and printhead 103. The RAM 214 provides an image data rasterization area, a work area for executing a program, and the like. The system bus 215 connects the respective blocks to each other to exchange data. The A/D converter 216 receives an analog signal from a sensor group (to be described later), A/D-converts it, and supplies the digital signal to the MPU 211.

Referring to Fig. 2, a host apparatus 200 is a computer (or a reader for reading an image, a digital camera, or the like) serving as an image data supply source. The host apparatus 200 and inkjet printing apparatus 100 transmit/receive image data, commands, status signals, and the like to/from each other via an interface (I/F) 201.

A switch group 220 includes switches for accepting instructions input by the operator, such as a power switch 221, a print switch 222 for instructing the start of printing, and a recovery switch 223 for designating activation of processing (recovery processing) for maintaining good ink discharge performance of the printhead 103. A sensor group 230 includes sensors for detecting the state of the inkjet printing apparatus 100, such as a position sensor 231 (for example, photocoupler) for detecting the home position, and a temperature sensor 232 arranged at an appropriate portion in the inkjet printing apparatus 100 to detect the ambient temperature.

A carriage motor driver 240 drives the carriage motor M1 to reciprocally scan the carriage 102 in the directions indicated by arrow A shown in Fig. 1. A conveyance motor driver 250 drives the conveyance motor M2 to convey the printing medium P.

At the time of print scanning by the printhead 103, the ASIC 213 transfers printing element (discharge heater) driving data to the printhead while directly accessing the storage area of the ROM 212.

Note that the ink cartridge 106 and printhead 103 are separable in the arrangement shown in Fig. 1, but may be integrated to configure an interchangeable head cartridge.

In the following embodiment, a droplet to be discharged from the printhead is ink, and a liquid contained in the ink tank is ink. However, the content is not limited to ink. For example, the ink tank may contain a processing liquid to be discharged to a printing medium in order to improve the fixation and water resistance of a printed image and improve the image quality.

The following embodiment adopts, particularly of inkjet printing systems, an arrangement (for example, electrothermal transducer and laser beam) which generates thermal energy as energy used to discharge ink. By using the method of changing the ink state by thermal energy, the printing density and resolution can be increased.

A full-line type printhead having a length corresponding to the maximum width of a printing medium printable by the inkjet printing apparatus 100 may employ either an arrangement which implements the length by combining a plurality of printheads, as disclosed in the above-mentioned specification, or the arrangement of one integrally formed printhead.

In addition, the printhead may be a cartridge type printhead in which an ink tank is integrated with the above-described printhead itself. Alternatively, the printhead may be an interchangeable chip type printhead which is mounted on the apparatus main body and can be electrically connected to the apparatus main body and receive ink from it.

The inkjet printing apparatus 100 in the embodiment may take the form of an inkjet printing apparatus integrally or separately arranged as the image output terminal of an information processing apparatus such as a computer. Alternatively, the inkjet printing apparatus 100 may take the form of a copying apparatus combined with a reading apparatus, or the form of a facsimile apparatus having transmission and reception functions.

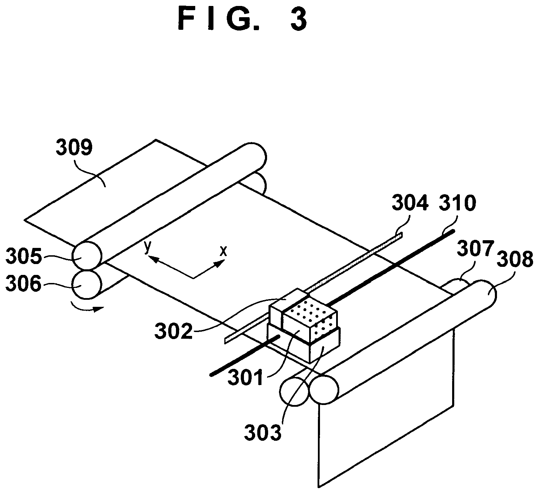

Fig. 3 is a perspective view showing the schematic arrangement of the printing unit of the inkjet printing apparatus 100. In Fig. 3, an ink cartridge 301 is configured to individually store four, black (Bk), cyan (C), magenta (M), and yellow (Y) color inks. The ink cartridge 301 is configured by integrating a plurality of ink tanks. A printhead cartridge 302 contains two printing element arrays per color corresponding to each ink stored in the ink cartridge 301, that is, a total of eight printing element arrays. The ink cartridge 301 and printhead cartridge 302 can be detachably mounted on a carriage 303. The carriage 303 is slidably coupled to a guide shaft 310 and can move along the guide shaft 310.

An encoder scale 304 is arranged on a surface facing the carriage 303, and has slits at an interval of 300 dpi. Light emitted by an encoder sensor (not shown) irradiates the encoder scale 304, and the encoder sensor outputs a signal regarding the scanning position of the carriage 303 based on the transmitted light. While clamping a printing medium 309 together with an auxiliary roller 306, a paper conveyance roller 305 rotates in a direction indicated by an arrow in Fig. 3, conveying the printing medium 309 in the y direction in Fig. 3. A pair of paper feed rollers 307 and 308 feed the printing medium 309 while clamping it.

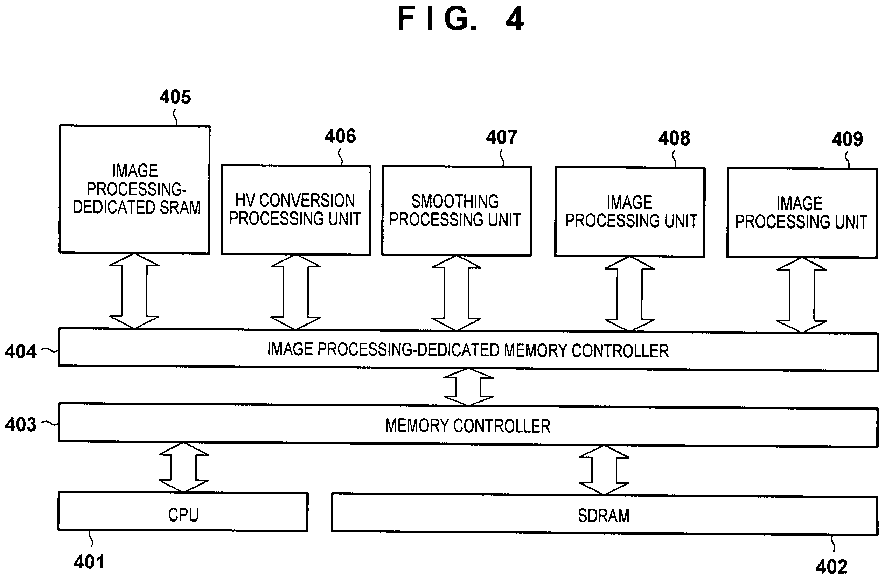

Fig. 4 is a block diagram showing an arrangement around the image processing units of the inkjet printing apparatus 100. A CPU 401 performs control of the overall inkjet printing apparatus 100, including register setting of each block and interrupt processing. An SDRAM 402 temporarily stores binary image data obtained by finally performing binarization processing after executing predetermined image processes for printing such as color conversion, masking, and gamma conversion for image data received from an external host apparatus. A memory controller 403 permits access according to preset priority in response to an access request from each block to the SDRAM 402, and performs read/write control to the SDRAM 402. Note that the SDRAM 402 includes an area for holding raster data before smoothing processing, and an area for storing data having undergone smoothing processing.

An image processing-dedicated memory controller 404 issues a request to the memory controller 403 to read out image data stored in the SDRAM 402. Then, the image processing-dedicated memory controller 404 stores the image data read out from the memory controller 403 in the image processing-dedicated SRAM 405. With this arrangement, respective image processing units 406 to 409 (to be described later) can perform image processes. In response to requests from the image processing units 406 to 409, the image processing-dedicated memory controller 404 reads out image data from an image processing-dedicated SRAM 405 and transfers them to the requesting image processing units. In response to write requests from the respective image processing units, the image processing-dedicated memory controller 404 receives processed image data and writes them in the image processing-dedicated SRAM 405. Further, the image processing-dedicated memory controller 404 reads out image data which has undergone all desired image processes and is stored in the image processing-dedicated SRAM 405, and the image processing-dedicated memory controller 404 issues a request to the memory controller 403 to store them in the SDRAM 402. The image processing-dedicated SRAM 405 stores image data read out from the SDRAM 402 by the image processing-dedicated memory controller 404 in order to perform image processes by the image processing units 406 to 409. The image processing-dedicated SRAM 405 has a capacity large enough to store image data necessary for at least one image processing.

The HV conversion processing unit 406 issues a request to the image processing-dedicated memory controller 404 to read image data which have been read out from the SDRAM 402 and are stored in the image processing-dedicated SRAM 405. The read image data are data of the raster format in which all data are aligned in the raster direction. Thus, the HV conversion processing unit 406 converts the data of the raster format into data of the column format in which data are aligned in the printing element array direction (column direction). That is, the HV conversion processing unit 406 is a data generation unit which generates data of the column format (column data). After the conversion, the HV conversion processing unit 406 issues a request again to the image processing-dedicated memory controller 404 to write back the converted data in the image processing-dedicated SRAM 405. When the HV conversion processing unit 406 writes the image data in the image processing-dedicated SRAM 405, the image processing-dedicated memory controller 404 writes back part of the image data in predetermined two regions (not shown) within the image processing-dedicated SRAM 405. The smoothing processing unit 407 issues a request to the image processing-dedicated memory controller 404 to read image data which have been read out from the SDRAM 402 and are stored in the image processing-dedicated SRAM 405. After smoothing processing, the smoothing processing unit 407 issues a request to the image processing-dedicated memory controller 404 to write back the image data in the image processing-dedicated SRAM 405.

The image processing units 408 and 409 issue requests to the image processing-dedicated memory controller 404 to read image data which have been read out from the SDRAM 402 and are stored in the image processing-dedicated SRAM 405. After performing predetermined image processes, the image processing units 408 and 409 issue requests to the image processing-dedicated memory controller 404 to write back the image data in the image processing-dedicated SRAM 405.

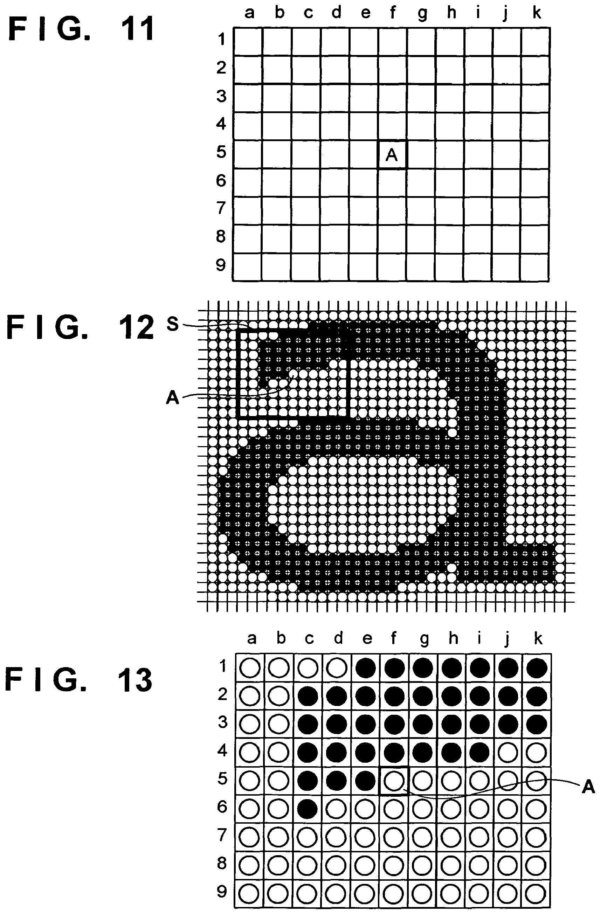

Smoothing processing will be explained. As shown in Fig. 11, smoothing processing refers to pixel data of a surrounding region (11 pixels in the main scanning direction × 9 pixels in the sub-scanning direction) for pixel A (pixel of interest) to be printed, and changes the pixel of interest in accordance with the feature. More specifically, when performing smoothing processing for pixel A of interest among dot data of an alphabet letter "a" shown in Fig. 12, dot data of region S (11 pixels in the main scanning direction × 9 pixels in the sub-scanning direction = 99 pixels) surrounding pixel A of interest are stored in the primary memory. Accordingly, dot data as shown in Fig. 13 are stored. By referring to the dot data in region S, data of pixel A of interest to be printed is changed in accordance with the features of these dot data. At this time, the data is changed so that the contour of a figure formed from dot data is smoothly printed. When continuing smoothing processing by changing a target serving as pixel A of interest, pixel data before smoothing processing becomes necessary for new region S surrounding new pixel A of interest.

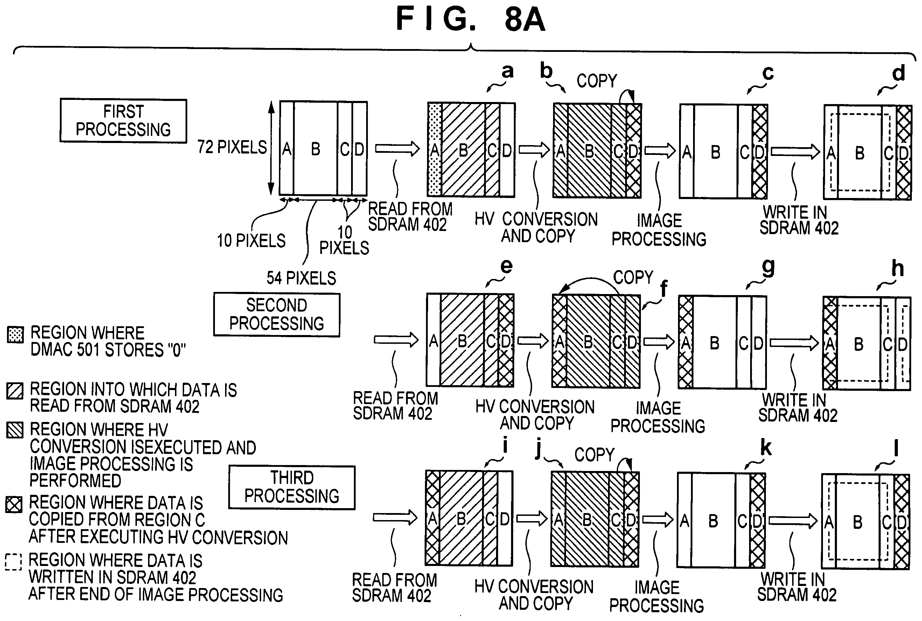

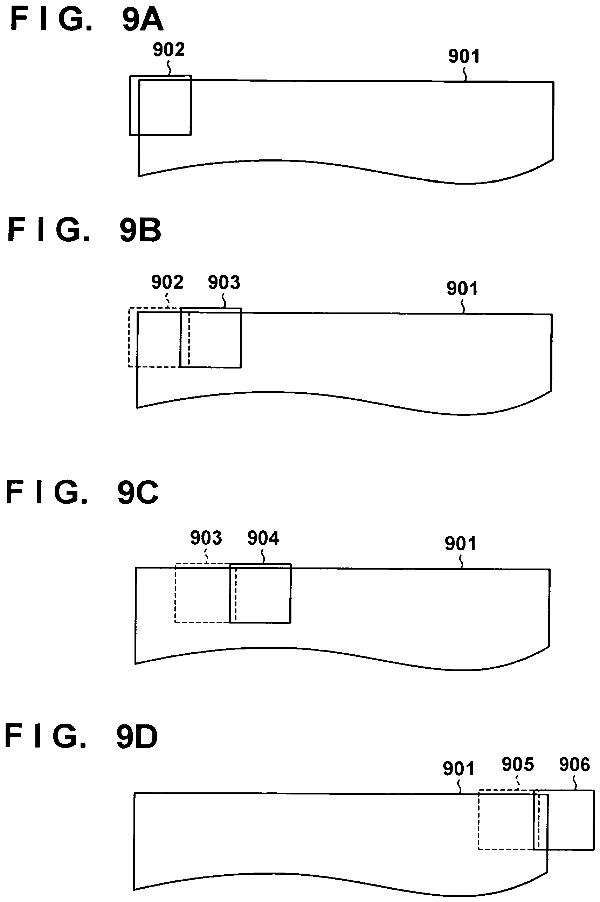

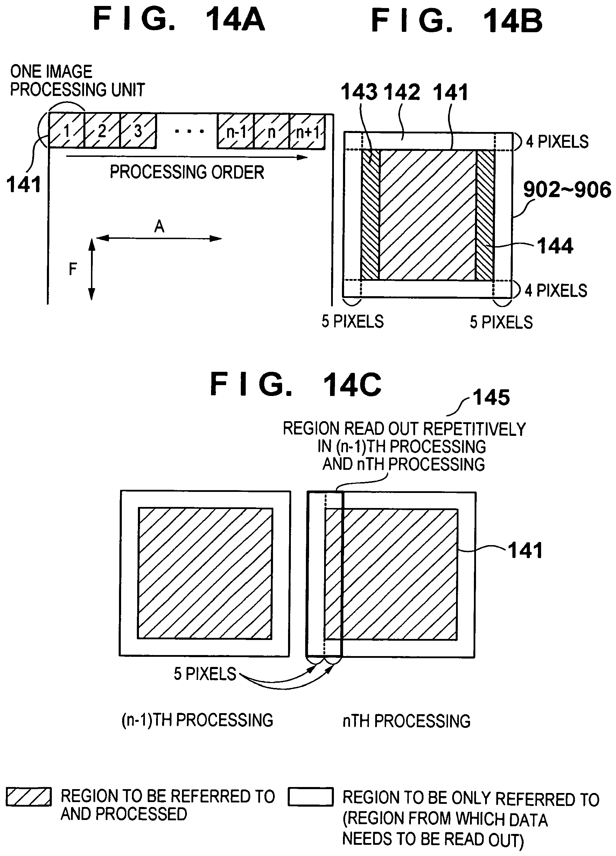

In this way, smoothing processing needs to refer to pixel data of the surrounding region of pixel A of interest. As shown in Figs. 14A and 14B, a region 141 is a smoothing processing target region. A region 142 is a region to be only referred to. Data 143 is data on the upstream side of data processing in the region 141. Data 144 is data on the downstream side of data processing in the region 141. In "d" of Fig. 8A, the data 143 is stored in region A, and the data 144 is stored in region C. In "h" of Fig. 8A, the data 143 is stored in region D, and the data 144 is stored in region C. Smoothing processing is executed sequentially, as shown in Fig. 14A. Arrow A indicates the main scanning direction and corresponds to arrow A in Fig. 1. Arrow F indicates the sub-scanning direction. As shown in Fig. 14B, the reference region 142 (five pixels on each of two sides in the main scanning direction and four pixels on each of two sides in the sub-scanning direction) is assigned around the smoothing processing target region 141. Note that each of regions 902 to 906 shown in Figs. 9A to 9D corresponds to the combined region of the regions 141 and 142 shown in Fig. 14B. As shown in Fig. 14C, when performing the nth processing, a region 145 referred to in the (n-1)th processing is referred to. In Figs. 9A to 9D, the data storage amounts of the regions 902 to 906 are equal.

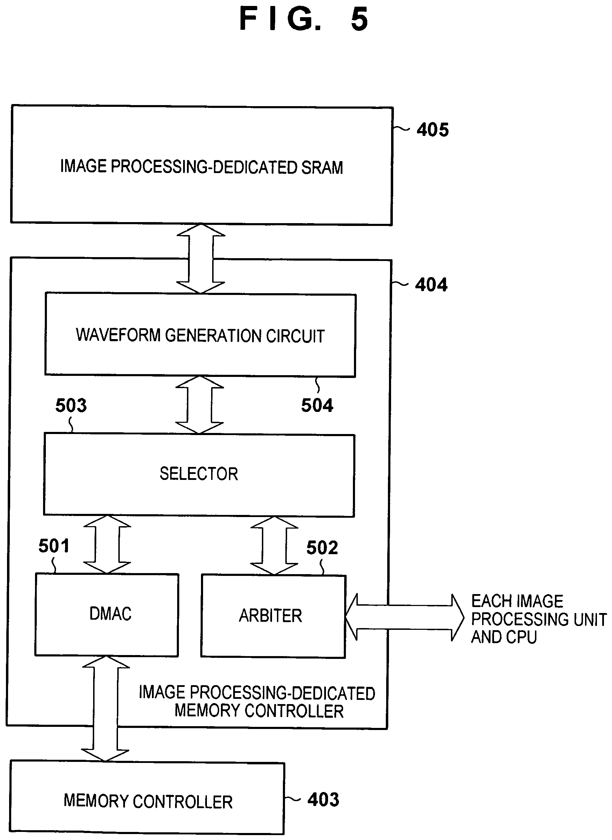

Fig. 5 is a block diagram showing the internal arrangement of the image processing-dedicated memory controller 404. A DMAC (Direct Memory Access Controller) 501 is a data transfer means for transferring data. The DMAC 501 issues a read request to the memory controller 403, receives image data read out from the SDRAM 402 by the memory controller 403, and writes it in the image processing-dedicated SRAM 405. Also, the DMAC 501 reads out data from the image processing-dedicated SRAM 405, issues a write request to the memory controller 403, and writes image data in the SDRAM 402 via the memory controller 403.

An arbiter 502 issues read or write permissions based on predetermined priority in response to read or write requests from the image processing units 406 to 409 and the CPU 401 for image data stored in the image processing-dedicated SRAM 405. When a read or write permission is issued to each image processing unit or the CPU 401, image data is read out from or written in the image processing-dedicated SRAM 405 in accordance with the request contents. A selector 503 switches to connect, to a waveform generation circuit 504, either of signal lines running from the DMAC 501 and arbiter 502 to the image processing-dedicated SRAM 405. Upon receiving an access request issued from the DMAC 501 or arbiter 502 to the image processing-dedicated SRAM 405 via the selector 503, the waveform generation circuit 504 generates an access signal adapted to the physical structure of the image processing-dedicated SRAM 405.

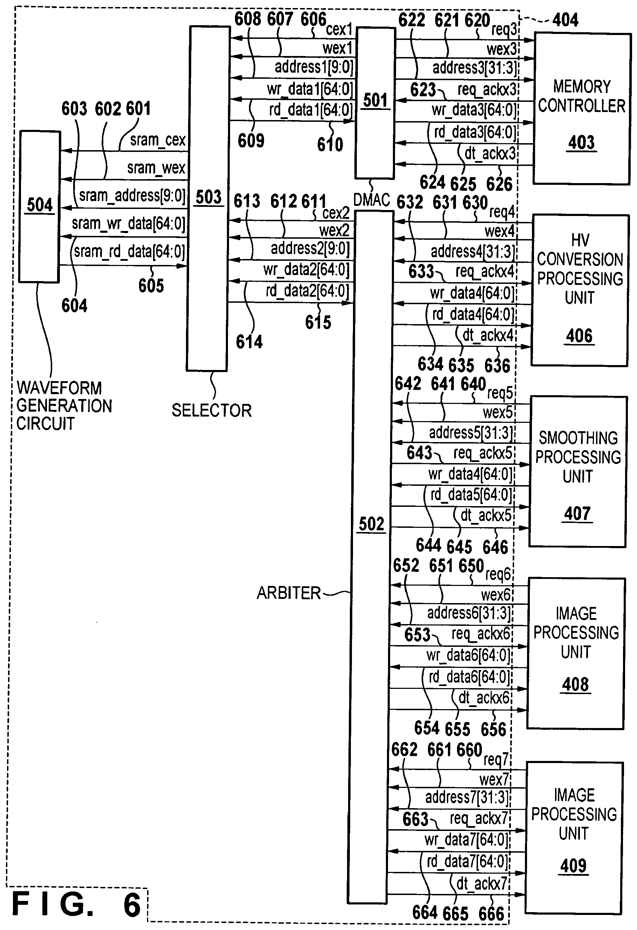

Fig. 6 is a view for explaining detailed connections in the image processing-dedicated memory controller 404 shown in Fig. 5 and with the memory controller 403. As shown in Fig. 6, five types of signal lines sram_cex 601, sram_wex 602, sram_address[9:0] 603, sram_wr_data[64:0] 604, and sram_rd_data[64:0] 605 are connected between the selector 503 and the waveform generation circuit 504. Five types of signal lines cex1 606, wex1 607, address1[9:0] 608, wr_data1[64:0] 609, and rd_data1[64:0] 610 are connected between the selector 503 and the DMAC 501.

Five types of signal lines cex2 611, wex2 612, address2[9:0] 613, wr_data2[64:0] 614, and rd_data2[64:0] 615 are connected between the selector 503 and the arbiter 502. Seven types of signal lines req3 620, wex3 621, address3[31:3] 622, req_ackx3 623, wr_data3[64:0] 624, rd_data3[64:0] 625, and dt_ackx3 626 are connected between the DMAC 501 and the memory controller 403. Seven types of signal lines req4 630, wex4 631, address4[31:3] 632, req_ackx4 633, wr_data4[64:0] 634, rd_data4[64:0] 635, and dt_ackx4 636 are connected between the arbiter 502 and the HV conversion processing unit 406. Seven types of signal lines req5 640, wex5 641, address5[31:3] 642, req_ackx5 643, wr_data5[64:0] 644, rd_data5[64:0] 645, and dt_ackx5 646 are connected between the arbiter 502 and the smoothing processing unit 407. Seven types of signal lines req6 650, wex6 651, address6[31:3] 652, req_ackx6 653, wr_data6[64:0] 654, rd_data6[64:0] 655, and dt_ackx6 656 are connected between the arbiter 502 and the image processing unit 408. Seven types of signal lines req7 660, wex7 661, address7[31:3] 662, req_ackx7 663, wr_data7[64:0] 664, rd_data7[64:0] 665, and dt_ackx7 666 are connected between the arbiter 502 and the image processing unit 409.

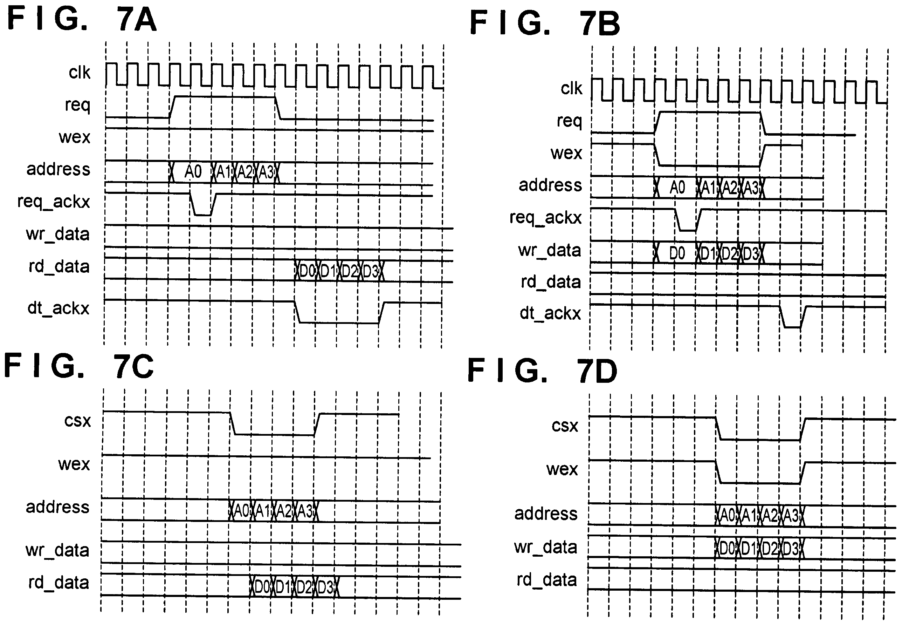

Figs. 7A to 7D are timing charts when performing data access between the blocks shown in Fig. 6. Communication is executed in synchronism with the cycle of a clock signal clk. Figs. 7A and 7B are timing charts when performing data access between the DMAC 501 and the memory controller 403, between the arbiter 502 and the HV conversion processing unit 406, between the arbiter 502 and the smoothing processing unit 407, between the arbiter 502 and the image processing unit 408, and between the arbiter 502 and the image processing unit 409. In Figs. 7A and 7B, req corresponds to req3 to req7 between the blocks, and wex corresponds to wex3 to wex7 between the blocks; address corresponds to address3 to address7 between the blocks, and req_ackx corresponds to req_ackx3 to req_ackx7 between the blocks; wr_data corresponds to wr_data3 to wr_data7 between the blocks, and rd_data corresponds to rd_data3 to rd_data7 between the blocks; and dt_ackx corresponds to dt_ackx3 to dt_ackx7 between the blocks.

Fig. 7A is a timing chart in data read, and Fig. 7B is a timing chart in data write. Figs. 7C and 7D are timing charts when performing data access between the selector 503 and the waveform generation circuit 504, between the selector 503 and the DMAC 501, and between the selector 503 and the arbiter 502. In Figs. 7C and 7D, csx corresponds to sram_csx, csx1, and csx2 between the blocks, and wex corresponds to sram_wex, wex1, and wex2 between the blocks; address corresponds to sram_address, address1, and address2 between the blocks, and wr_data corresponds to sram_wr_data, wr_data1, and wr_data2 between the blocks; and rd_data corresponds to sram_rd_data, rd_data1, and rd_data2 between the blocks. Fig. 7C is a timing chart in data read, and Fig. 7D is a timing chart in data write.

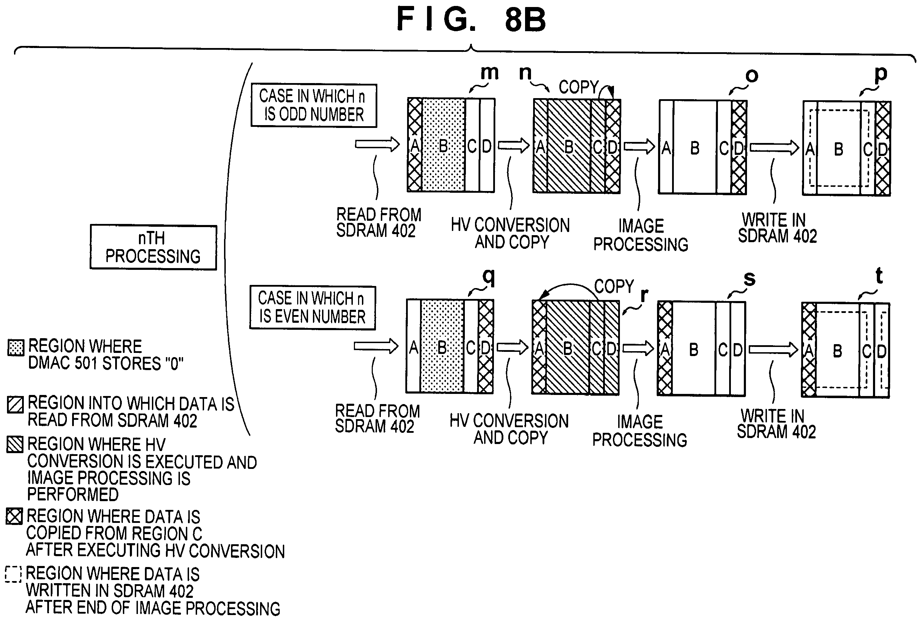

Details of an image processing sequence in the embodiment will be explained with reference to Figs. 8 and 9A to 9D. Fig. 8A and 8B are views showing an image processing sequence to be performed by the arrangement shown in Fig. 4 based on an image of image data stored in the image processing-dedicated SRAM 405. Figs. 9A to 9D show a position where processing is currently performed on a printing medium in image processing shown in Fig. 8A and 8B.

Fig. 8A and 8B show an image of image data which is stored in the image processing-dedicated SRAM 405 and used in printing. The size of the image processing-dedicated SRAM 405 is 84 pixels in the horizontal direction × 72 pixels in the vertical direction. In the embodiment, the region of 84 pixels in the horizontal direction × 72 pixels in the vertical direction is further divided into regions A, B, C, and D in a predetermined direction. Region A has 10 pixels in the horizontal direction × 72 pixels in the vertical direction. Region B has 54 pixels in the horizontal direction × 72 pixels in the vertical direction. Region C has 10 pixels in the horizontal direction × 72 pixels in the vertical direction. Region D has 10 pixels in the horizontal direction × 72 pixels in the vertical direction. As described above, the SRAM 405 stores image data of an amount corresponding to the size of the region. The predetermined direction is the main scanning direction described above.

The region 902 shown in Fig. 9A is a region where processing is performed first in the image processing-dedicated SRAM 405, and corresponds to the upper left end on a printing medium 901. Processes shown in "a" to "d" of Fig. 8A are performed for the region 902 (first processing). In "a" of Fig. 8A, region A is a portion outside the printing medium 901, and the DMAC 501 writes null data "0" in the entire region A. The DMAC 501 includes a null data generation unit which generates null data "0". At the same time, the DMAC 501 reads out image data from the SDRAM 402 for regions B and C, and stores them. For example, the CPU 401 performs the selection of regions where null data and image data are stored.

As shown in "b" of Fig. 8A, the HV conversion processing unit 406 reads out all image data of regions B and C, performs HV conversion processing, and writes back the image data again in regions B and C. When the HV conversion processing unit 406 issues a write-back request, the waveform generation circuit 504 also writes, in region D, image data to be written back in region C. The order of writing image data in regions C and D is arbitrary. For example, image data may be written sequentially in regions C and D, or simultaneously in regions C and D. Image data to be copied in region D is image data before image processing (before smoothing processing).

As shown in "c" of Fig. 8A, to perform predetermined processes by the smoothing processing unit 407, image processing unit 408, and image processing unit 409 for image data of regions A, B, and C, the image data are read out from the image processing-dedicated SRAM 405. After the end of the processes, the image data are written back again in the image processing-dedicated SRAM 405. For example, the CPU 401 performs the selection of a region where image data is read out, and the selection of a region where predetermined processing is performed.

As shown in "d" of Fig. 8A, the DMAC 501 writes back, in the SDRAM 402, the image data of regions A, B, and C having undergone the image processes. In the image data of regions A, B, and C, image data in a region surrounded by a broken line has actually undergone smoothing processing. Image data outside the region surrounded by the broken line is only referred to when performing smoothing processing. Thus, image data to be written back in the SDRAM 402 is only image data in the region surrounded by the broken line.

The region 903 shown in Fig. 9B is to be processed next, and is adjacent in a predetermined direction to the printing medium 902 having undergone the first processing. Processes shown in (e) to (h) of Fig. 8A and 8B are performed for the region 903 (second processing).

As shown in "e" of Fig. 8A, the DMAC 501 reads out image data from the SDRAM 402 for regions B and C, and stores them. As shown in "f" of Fig. 8A, the HV conversion processing unit 406 reads out all image data of regions B and C, performs HV conversion processing, and writes back the image data again in regions B and C. When the HV conversion processing unit 406 issues a write-back request, the waveform generation circuit 504 simultaneously writes, in region A, image data to be written back in region C.

As shown in "g" of Fig. 8A, image data of region D having already undergone HV conversion processing in the first processing, and image data of regions B and C continue on an image in the order of regions D, B, and C. To perform predetermined processes by the smoothing processing unit 407, image processing unit 408, and image processing unit 409 for image data of regions D, B, and C, the image data are read out from the image processing-dedicated SRAM 405. After the end of the processes, the image data are written back again in the image processing-dedicated SRAM 405.

As shown in "h" of Fig. 8A, the DMAC 501 writes back, in the SDRAM 402, the image data having undergone the image processes. Similar to the first processing, in the image data of regions D, B, and C, image data in a region surrounded by a broken line has actually undergone the image processes. Image data outside the region surrounded by the broken line is only referred to when performing smoothing processing. Hence, image data to be written back in the SDRAM 402 is only image data in the region surrounded by the broken line.

The region 904 shown in Fig. 9C is processed next, and is adjacent to the printing medium 903 having undergone the second processing. Processes shown in "i" to "l" of Fig. 8A are performed for the region 904 (third processing).

As shown in "i", the DMAC 501 reads out image data from the SDRAM 402 for regions B and C, and stores them. As shown in "j" of Fig. 8A, the HV conversion processing unit 406 reads out all image data of regions B and C, performs HV conversion processing, and writes back the image data again in regions B and C. When the HV conversion processing unit 406 issues a write-back request, the waveform generation circuit 504 simultaneously writes, in region D, image data to be written back in region C.

As shown in "k" of Fig. 8A, image data of region A having already undergone HV conversion processing in the second processing, and image data of regions B and C continue on an image in the order of regions A, B, and C. To perform predetermined processes by the smoothing processing unit 407, image processing unit 408, and image processing unit 409 for image data of regions A, B, and C, the image data are read out from the image processing-dedicated SRAM 405. After the end of the processes, the image data are written back again in the image processing-dedicated SRAM 405.

As shown in "l" of Fig. 8A, the DMAC 501 writes back, in the SDRAM 402, the image data having undergone the image processes. Similar to the first and second processes, in the image data of regions A, B, and C, image data in a region surrounded by a broken line has actually undergone the image processes. Image data outside the region surrounded by the broken line is only referred to when performing smoothing processing. Therefore, image data to be written back in the SDRAM 402 is only image data in the region surrounded by the broken line.

After that, in even-numbered processes, the same processing as the second processing is repeated. In odd-numbered processes, the same processing as the third processing is sequentially repeated. The processes are sequentially repeated in this manner. When processing for the region 906 in Fig. 9D at the upper right end on the printing medium 901 is odd-numbered processing, processes shown in (m) to (p) of Fig. 8A and 8B are performed, and when it is even-numbered processing, processes shown in "q" to "t" of Fig. 8B are performed (Nth processing).

A case in which the Nth processing is odd-numbered processing will be described. As shown in "m" of Fig. 8B, region B is a portion outside the printing medium, and the DMAC 501 writes "0" in the entire region B.

As shown in "n" of Fig. 8B, the HV conversion processing unit 406 reads out all image data of regions B and C, performs HV conversion processing, and writes back the image data again in regions B and C. When the HV conversion processing unit 406 issues a write-back request, the waveform generation circuit 504 simultaneously writes, in region D, image data to be written back in region C.

As shown in "o" of Fig. 8B, to perform predetermined processes by the smoothing processing unit 407, image processing unit 408, and image processing unit 409 for image data of regions A, B, and C, the image data are read out from the image processing-dedicated SRAM 405. After the end of the processes, the image data are written back again in the image processing-dedicated SRAM 405.

As shown in "p" of Fig. 8B, the DMAC 501 writes back, in the SDRAM 402, the image data of regions A, B, and C having undergone the image processes. In the image data of regions A, B, and C, image data in a region surrounded by a broken line has actually undergone the image processes. Image data outside the region surrounded by the broken line is only referred to when performing smoothing processing. Image data to be written back in the SDRAM 402 is only image data in the region surrounded by the broken line.

A case in which the Nth processing is even-numbered processing will be described.

As shown in "q" of Fig. 8B, region B is a portion outside the printing medium, and the DMAC 501 writes "0" in the entire region B.

As shown in "r" of Fig. 8B, the HV conversion processing unit 406 reads out all image data of regions B and C, performs HV conversion processing, and writes back the image data again in regions B and C. When the HV conversion processing unit 406 issues a write-back request, the waveform generation circuit 504 simultaneously writes, in region A, image data to be written back in region C.

As shown in "s" of Fig. 8B, image data of region D having already undergone HV conversion processing in the first processing, and image data of regions B and C continue on an image in the order of regions D, B, and C. To perform predetermined processes by the smoothing processing unit 407, image processing unit 408, and image processing unit 409 for image data of regions D, B, and C, the image data are read out from the image processing-dedicated SRAM 405. After the end of the processes, the image data are written back again in the image processing-dedicated SRAM 405.

As shown in "t" of Fig. 8B, the DMAC 501 writes back, in the SDRAM 402, the image data having undergone the image processes. Similar to the first processing, in the image data of regions D, B, and C, image data in a region surrounded by a broken line has actually undergone the image processes. Image data outside the region surrounded by the broken line is only referred to when performing smoothing processing. Image data to be written back in the SDRAM 402 is only image data in the region surrounded by the broken line. As described above, the step of operating the HV conversion processing unit 406 and then operating the smoothing processing unit 407 is executed a plurality of times under the control of the CPU 401.

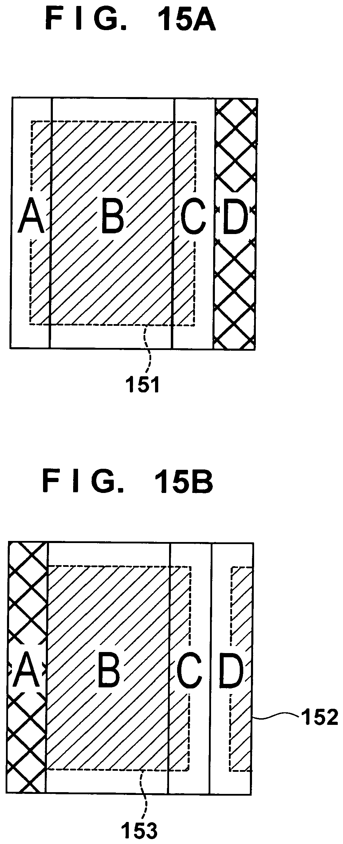

The amount and region of data to be written in the SDRAM 402 out of data which have undergone smoothing processing and are held in the SRAM 405 in Fig. 8A and 8B will be explained with reference to Figs. 15A and 15B. In "d" of Fig. 8A, data of a hatched region 151 is read out and stored in the SDRAM 402, as shown in Fig. 15A. Data read in "i" and "p" of Fig. 8A and 8B is the same as data read in "d" of Fig. 8A. In "h" of Fig. 8A, data of hatched regions 152 and 153 are read out and stored in the SDRAM 402, as shown in Fig. 15B. Data read in "t" of Fig. 8B is the same as data read in "h" of Fig. 8B.

Note that the size of the image processing-dedicated SRAM 405 is not limited to the above-described arrangement. Also, the sizes of all regions A, B, C, and D may be equal to each other. For example, the horizontal sizes of all regions A, B, C, and D may be 128 pixels.

In the embodiment, as shown in Figs. 14A to 14C, target data and reference data in the next image processing are stored in regions designated by the CPU 401 in correspondence with the order of image processing units before performing image processing. More specifically, referring to Fig. 8A and 8B, data stored in region C is stored in region D in the first image processing, as shown in "b" of Fig. 8A. In the second image processing, data stored in region C is stored in region A, as shown in "f" of Fig. 8A.

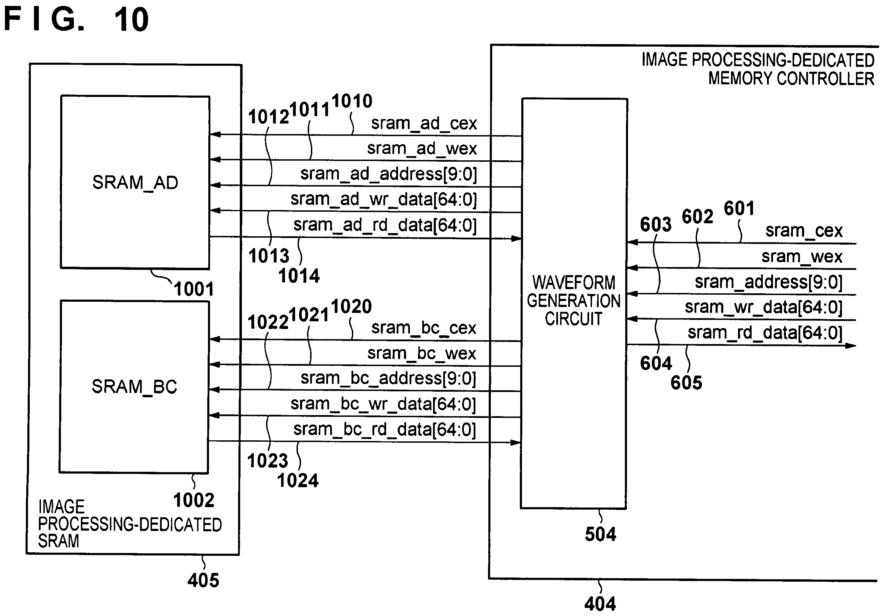

In this image processing sequence, when writing back image data in regions B and C after the HV conversion processing unit 406 performs HV conversion processing, the waveform generation circuit 504 simultaneously writes, in region A or D, image data to be written back in region C. The image processing-dedicated SRAM 405 may be a dual-port SRAM so that data can be parallelly written in different portions of the image processing-dedicated SRAM 405. It is also possible to form regions A and D from one physical SRAM_AD 1001 and form regions B and C from one physical SRAM_BC 1002, as shown in Fig. 10. In this arrangement, buses 1010 to 1014 and 2010 to 2014 are interposed between the image processing-dedicated SRAM 405 and the waveform generation circuit 504. With this arrangement, data read and data write can be independently executed between the SRAM_AD 1001 and SRAM_BC 1002, and the waveform generation circuit 504. However, when the required processing time is sufficient or the gate scale of the circuit does not have a margin, the same image data as image data to be written in region C may be written in region A or D before or after writing image data in region C. In this case, the image processing-dedicated SRAM 405 may be formed from one physical, single-port SRAM.

According to the embodiment, the same processing as that described above can be performed by copying, in the SRAM, an overlapping region between the (n-1) th processing and the nth processing not only when smoothing processing is performed, but also when image processing which refers to a region larger than a region to be actually processed and cannot reuse data used in previous image processing is performed.

### <Other Embodiments>

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments.

## Claims

1. An image processing apparatus (100) for sequentially processing image regions which overlap by a predetermined number of pixels in a predetermined direction, the apparatus comprising:
a memory (405) in which a first region (B), a second region (C), a third region (D), and a fourth region (A) respectively store rectangular image regions, of which three out of four regions form a rectangular combined image region, wherein the predetermined number of pixels is assigned to widths of respective image regions in the second region (C), the third region (D), and the fourth region (A) in the predetermined direction;
processing means (407) for performing the sequential processing of changing data stored in three out of the four memory regions, by alternating between a first processing in which the three memory regions are the first region (B), the second region (C), and the fourth region (A), and a second processing in which the three memory regions are the first region (B), the second region (C), and the third region (D);
storage means (404) for, before performing each alteration of the predetermined processing, storing data in the first region (B) and the second region (C), and copying the data of one memory region by storing, for the first processing, in the third region (D), the same data as the data stored in the second region (C), and for the second processing, in the fourth region (A), the same data as the data stored in the second region (C); and
selection means (401) for, in the case of the first processing, selecting the first region (B), the second region (C), and the fourth region (A) as memory regions to be processed by said processing means, and in the case of the second processing, selecting the first region (B), the second region (C), and the third region (D) as memory regions to be processed by said processing means.

2. The apparatus according to claim 1, further comprising:
reading means (404) for, after the predetermined processing, reading out data from the first region (B) and the second region (C), and reading out data from the third region (D) in the case of the second processing, or from the fourth region (A) in the case of the first processing.

3. The apparatus according to claim 1, wherein the predetermined processing is a smoothing processing.

## Patentansprüche

1. Bildverarbeitungsvorrichtung (100) zum aufeinanderfolgenden Verarbeiten von Bildgebieten, die sich in einer vorbestimmten Richtung um eine vorbestimmte Anzahl Pixel überlappen, wobei die Vorrichtung umfasst:
einen Speicher (405), auf dem ein erstes Gebiet (B), ein zweites Gebiet (C), ein drittes Gebiet (D) und ein viertes Gebiet (A) jeweils rechtwinklige Bildgebiete speichern, von welchen drei von vier Gebieten ein rechtwinkliges kombiniertes Bildgebiet bilden, wobei die vorbestimmte Anzahl Pixel den Breiten von jeweiligen Bildgebieten im zweiten Gebiet (C), im dritten Gebiet (D) und im vierten Gebiet (A) in der vorbestimmten Richtung zugeordnet ist;
eine Verarbeitungseinrichtung (407) zum Durchführen der aufeinanderfolgenden Verarbeitung eines Änderns von in drei der vier Speichergebiete gespeicherten Daten, durch Abwechseln zwischen einer ersten Verarbeitung, bei welcher die drei Speichergebiete das erste Gebiet (B), das zweite Gebiet (C) und das vierte Gebiet (A) sind, und einer zweiten Verarbeitung, bei welcher die drei Speichergebiete das erste Gebiet (B), das zweite Gebiet (C) und das dritte Gebiet (D) sind;
eine Speichereinrichtung (404) zum, vor Durchführen jedes Wechsels der vorbestimmten Verarbeitung, Speichern von Daten im ersten Gebiet (B) und im zweiten Gebiet (C), und Kopieren der Daten eines Speichergebiets durch Speichern, für die erste Verarbeitung, derselben Daten wie die im zweiten Gebiet (C) gespeicherten Daten in das dritte Gebiet (D), und durch Speichern, für die zweite Verarbeitung, derselben Daten wie die im zweiten Gebiet (C) gespeicherten Daten in das vierte Gebiet (A); und
eine Auswahleinrichtung (401) zum Auswählen des ersten Gebiets (B), des zweiten Gebiets (C) und des vierten Gebiets (A) als von der Verarbeitungseinrichtung zu verarbeitende Speichergebiete, im Falle der ersten Verarbeitung, und zum Auswählen des ersten Gebiets (B), des zweiten Gebiets (C) und des dritten Gebiets (D) als von der Verarbeitungseinrichtung zu verarbeitende Speichergebiete, im Falle der zweiten Verarbeitung.

2. Vorrichtung nach Anspruch 1, ferner umfassend:
eine Leseeinrichtung (404) zum Auslesen, nach der vorbestimmten Verarbeitung, von Daten aus dem ersten Gebiet (B) und dem zweiten Gebiet (C), sowie zum Auslesen von Daten aus dem dritten Gebiet (D), im Falle der zweiten Verarbeitung, oder aus dem vierten Gebiet (A), im Falle der ersten Verarbeitung.

3. Vorrichtung nach Anspruch 1, wobei die vorbestimmte Verarbeitung eine Glättungsverarbeitung ist.

## Revendications

1. Appareil de traitement d'image (100) pour traiter séquentiellement des régions d'image qui se chevauchent d'un nombre prédéterminé de pixels dans une direction prédéterminée, l'appareil comprenant :
une mémoire (405) dans laquelle une première région (B), une deuxième région (C), une troisième région (D) et une quatrième région (A) stockent respectivement des régions d'image rectangulaires, sur lesquelles trois des quatre régions forment une région d'image combinée rectangulaire, dans lequel le nombre prédéterminé de pixels est affecté à des largeurs de régions d'image respectives dans la deuxième région (C), la troisième région (D), et la quatrième région (A) dans la direction prédéterminée ;
un moyen de traitement (407) pour effectuer le traitement séquentiel consistant à modifier des données stockées dans trois des quatre régions de mémoire, en alternant entre un premier traitement dans lequel les trois régions de mémoire sont la première région (B), la deuxième région (C) et la quatrième région (A), et un deuxième traitement dans lequel les trois régions de mémoire sont la première région (B), la deuxième région (C) et la troisième région (D) ;
un moyen de stockage (404) pour, avant d'effectuer chaque modification par le traitement prédéterminé, stocker des données dans la première région (B) et la deuxième région (C), et copier les données d'une région de mémoire en stockant, pour le premier traitement, dans la troisième région (D), les mêmes données que les données stockées dans la deuxième région (C), et pour le deuxième traitement, dans la quatrième région (A), les mêmes données que les données stockées dans la deuxième région (C) ; et
un moyen de sélection (401) pour, dans le cas du premier traitement, sélectionner la première région (B), la deuxième région (C) et la quatrième région (A) en tant que régions de mémoire devant être traitées par ledit moyen de traitement, et dans le cas du deuxième traitement, sélectionner la première région (B), la deuxième région (C) et la troisième région (D) en tant que régions de mémoire devant être traitées par ledit moyen de traitement.

2. Appareil selon la revendication 1, comprenant en outre :
un moyen de lecture (404) pour, après le traitement prédéterminé, lire des données à partir de la première région (B) et de la deuxième région (C), et lire des données à partir de la troisième région (D) dans le cas du deuxième traitement, ou de la quatrième région (A) dans le cas du premier traitement.

3. Appareil selon la revendication 1, dans lequel le traitement prédéterminé est un traitement de lissage.
